Europäisches Patentamt

European Patent Office

Office européen des brevets

(11) Publication number: **0 341 853**
**A1**

## (12) EUROPEAN PATENT APPLICATION

(21) Application number: **89304093.1**

(22) Date of filing: **25.04.89**

(51) Int. Cl.⁴: **F16B 21/02**

(30) Priority: **09.05.88 GB 8810925**

(43) Date of publication of application:
**15.11.89 Bulletin 89/46**

(84) Designated Contracting States:
**DE ES FR IT**

(71) Applicant: **CAMLOC (U.K.) LIMITED**
**15 New Star Road**
**Leicester LE4 7JD(GB)**

(72) Inventor: **Lindley, Adrian Q.**
**20 Bourne Road Colsterworth**
**Grantham Lincolnshire(GB)**
Inventor: **Bellamy, Roger**
**51 Green Lane**
**Seagrave Leicestershire(GB)**

(74) Representative: **Goodenough, Nigel et al**
**A.A. Thornton & Co. Northumberland House**
**303-306 High Holborn**
**London WC1V 7LE(GB)**

(54) Fastener.

(57) A quick release structural fastener for use e.g. in erecting temporary gantries comprises a stud (4) having a threaded portion (5) at one end thereof on which a self-locking nut (6) is mounted, and a cross pin (7) at the other end thereof. The cross pin (7) is a clearance fit through a slot provided in a receptacle (8) and after insertion through the slot may be rotated through 90° by a tommy bar (12) to move the cross pin out of register with the slot. Nut (6) may then be tightened to clamp structural members (2,3) between the cross pin (7) and receptacle (8) on the one hand and the nut (6) and a washer (16) on the other hand. A metal grommet (15) resists shear movement of the members (2,3).

Fig.2.

# FASTENER

This invention relates to a fastener, and more particularly to a quick-release fastener capable of withstanding substantial tensile and shear loading.

Traditionally, quick-release fastenings have been used for securing such items as inspection covers which require frequent removal, but are not subject to substantial mechanical loading. Where structural members must be releaseably secured to each other by means capable of transmitting substantial shear and/or tensile forces, nuts and bolts or screws entering threaded holes have been used. Whilst such threaded fasteners obviously provide the desired structural connections, they suffer from many well recognized disadvantages in use. For example, if screws are used to engage threaded holes in a structural member they can be difficult to engage and are liable to be damaged in use; if nuts and bolts are used both hands, and two spanners, are required to secure the fastenings; loose nuts and bolts are liable to be lost, etc. No quick-release fastener which in size and function could replace a conventional screw or nut and bolt arrangement has been capable of withstanding the tensile or shear loading of a conventional screw or nut and bolt.

According to one aspect of the present invention a quick-release fastener comprises: a stud having a threaded portion at one end thereof and a cross pin at the other end thereof; a receptacle having a slot therein through which the cross pin can pass when the cross pin is aligned with the slot but through which the cross pin cannot pass when it is not aligned with the slot; and a nut mounted on the threaded portion of the stud.

In use, the receptacle is secured to one of a pair of members which are to be secured together by the fastener. The stud extends through an aperture in the other member, with the nut on the side of the other member remote from the receptacle. The members are offered up to each other and the cross pin is aligned with the slot in the receptacle and pushed through the slot. The stud is then rotated to move the pin out of alignment with the slot and the nut is tightened on the threaded portion of the stud to draw the members together.

Preferably, the receptacle is mounted on the side of its associated member remote from the other member, whereby the member associated with the receptacle is sandwiched between the receptacle and the other member as the fastener is tightened.

Preferably, means are provided for detaining the cross pin at a position out of alignment with the slot, preferably 90° out of alignment with the slot. Such detaining means may be in the form of a spring clip which provides for a snap location of the cross pin at a position 90° out of alignment with the slot. In this case, the end of the stud remote from the cross pin is preferably provided with means facilitating rotation of the stud to procure the desired snap location. Such means may, for example, comprise a tommy bar.

In a particularly preferred embodiment of the invention the stud and nut are captive on one of the members to be secured by the fastener and the receptacle is secured to the other member. In this manner, no part of the fastener is normally detached from its associated member, and accordingly the possibility for lose of any part of the fastener is obviated.

Preferably, a grommet surrounds the stud and is a snug fit within the apertures provided in both members for the passage of the stud. In this manner, the fastener provides a very high degree of shear resistance.

The invention will be better understood from the following description of a preferred embodiment thereof, given by way of example only, reference being had to the accompanying drawing wherein:

Figure 1 is a top plan view of a preferred embodiment of fastener according to the present invention;

Figure 2 is a view partly in section of the fastener of Figure 1; and

Figure 3 is a bottom plan view of the fastener of Figures 1 and 2.

Referring to the drawings, the fastener 1 is shown connecting together a first member 2 and a second member 3. The members 2,3 are structural members and the fastener provides a structural connection between the members. A typical use for the fastener would be to secure together structural members of a temporary gantry arrangement, for example for carrying temporary flood lighting. However, it will be appreciated that the fastener may be used in a wide range of applications.

The fastener 1 comprises a stud 4 having a threaded portion 5 at one end thereof upon which a self-locking nut 6 is mounted. The other end of the stud 4 carries a cross pin 7. Preferably, the cross pin 7 is an integral part of the stud and the stud is formed by forging or machining from a solid block.

The cross pin 7 is a clearance fit in a slot provided in a receptacle 8. The receptacle 8 is secured to the member 3 by any suitable means and includes a pair of abutments 9 which are engaged by the cross pin if the cross pin is inserted through the slot and the stud is rotated

through 90°. A spring clip 10 overlies the receptacle 8 and defines a pair of bulges 11 which are engaged by the cross pin 7 as the stud is rotated between the position in which the cross pin is aligned with the slot in the receptacle and the illustrated position in which the cross pin is in engagement with the abutments 9. Rotation of the stud between the position in which the cross pin 7 is aligned with the slot in the receptacle and the illustrated position cams the bulges outwardly until the trailing edges of the cross pin pass beyond the peak of the bulges, whereupon the spring clip returns the bulges to the illustrated position. The spring clip accordingly provides a snap locating arrangement which retains the cross pin in the illustrated position in engagement with the abutments 9 until sufficient reverse torque is applied to the stud to cam the bulges 11 outwardly.

Preferably, a tommy bar 12 is fixed to the threaded end of the stud whereby torque necessary to snap the cross pin into the illustrated position, and to remove the cross pin from the illustrated position, can be applied by manually grasping the tommy bar.

The stud 5 passes through a clearance hole 13 in the member 2 and through a somewhat larger clearance hole 14 in the member 3. The diameter of the hole 14 is sufficient to allow the cross pin 7 to pass through the member 3. In order to provide a high level of shear resistance in the fastener a metal grommet 15 surrounds the stud 4 and is a snug fit within the clearance holes 13 and 14. Preferably, the grommet 15 is mounted on the stud 4 before the threads are rolled on the threaded portion 5, whereby the grommet 15 is held captive on the stud 4 by the threaded portion 5.

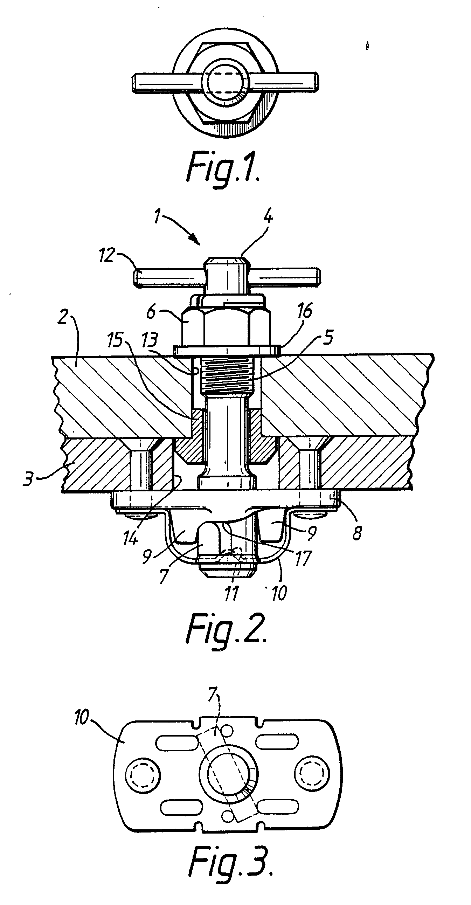

In Figure 2 the fastener is illustrated in its use configuration. The nut 6 is tightened down against a washer 16 which bears on the upper surface of the member 2. The cross pin 7 is drawn against flat surfaces 17 of the receptacle 8 and accordingly the member 3 is sandwiched between the receptacle 8 and the member 2. The fastener, when installed in this manner, acts as a structural fastener of a strength comparable to a nut and bolt arrangement.

To release the fastener, the nut 6 is rotated with a suitable spanner to relieve the stud of any pre-load force. The tommy bar 12 is then manually grasped and used to rotate the stud 4 through 90° whereupon the cross pin 7 can pass through the slot in the receptacle 8 and through the clearance hole 14 in the member 3 to release the member 3 from the member 2. It will be noted that the receptacle 8 and spring clip 10 remain captive on the member 3, and that the remaining components of the fastener remain captive on the member 2. The members 2 and 3 can be reconnected by the reverse of the above procedure, the tommy bar 12 being used to snap the cross pin 7 into the illustrated position, and the nut 6 then being tightened to achieve the desired pre-load on the fastener.

## Claims

1. A quick release fastener comprises: a stud having a threaded portion at one end thereof and a cross pin at the other end thereof; a receptacle having a slot therein through which the cross pin can pass when the cross pin is aligned with the slot but through which the cross pin cannot pass when it is not aligned with the slot; and a nut mounted on the threaded portion of the stud.

2. A quick release fastener according to claim 1 wherein means are provided for detaining the cross pin at a position out of alignment with the slot.

3. A quick release fastener according to claim 2 wherein the detaining means comprises a spring clip which provides for a snap location of the cross pin at a position 90° out of alignment with the slot.

4. A quick release fastener according to any preceding claim including means at the end of the stud remote from the cross pin to facilitate rotation of the stud.

5. A quick release fastener according to claim 4 wherein the means to facilitate rotation of the stud comprises a tommy bar.

6. A quick release fastener according to any preceding claim wherein a grommet surrounds the stud and is positioned such that it may enter apertures provided in two members to be connected by the fastener to provide resistance to shear movement of the members.

7. A quick release fastener according to claim 6 wherein the grommet is held captive on the stud.

8. A quick release fastener according to any preceding claim wherein the stud and nut are held captive on one structural member and the receptacle is held captive on a second structural member on the side thereof remote from the first structural member whereby the second structural member is sandwiched between the first structural member and the receptacle when the nut is tightened.

9. A quick release fastener according to claim 8 wherein the nut is on the side of the first structural member remote from the second structural member whereby the first structural member is sandwiched between the nut and the second structural member when the nut is tightened.

Fig.1.

Fig.2.

Fig.3.

**EUROPEAN SEARCH REPORT**

## DOCUMENTS CONSIDERED TO BE RELEVANT

EP 89304093.1

| Category | Citation of document with indication, where appropriate, of relevant passages | Relevant to claim | CLASSIFICATION OF THE APPLICATION (Int. Cl.4) |
|---|---|---|---|
| A | DE - A - 2 305 157 (DZUS FASTENER CO. INC.) * Fig. 1,2,3,5; page 5, lines 25-31; page 6, lines 1-10 * | 1,2,4, 8 | F 16 B 21/02 |
| A | DE - A1 - 3 011 848 (CAMLOC FASTENER GMBH) * Fig. 1 * | 1,2,4, 8 | |
| A | DE - A1 - 2 817 251 (REXNORD INC.) * Fig. 1,4,5,6,7 * | 1,2,3, 4,8 | |
| A | DE - A1 - 3 737 178 (AVIBANK MFG., INC.) * Abstract * | 1,2,4, 8 | |

TECHNICAL FIELDS SEARCHED (Int. Cl.4)

F 16 B 2/00
F 16 B 5/00
F 16 B 21/00

The present search report has been drawn up for all claims

| Place of search | Date of completion of the search | Examiner |
|---|---|---|
| VIENNA | 12-07-1989 | RIEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82